# EUROPEAN PATENT SPECIFICATION

(11) **EP 0 677 546 B1**
(45) Date of publication and mention of the grant of the patent: **14.07.1999**
(21) Application number: 95200532.0
(22) Date of filing: 03.03.1995
(51) Int. Cl.: C08J 5/10, C08K 13/06, C08L 21/00

(54) **Rubber/polyester cord composite and tire with component thereof**
Gummi/Polyesterkord Verbundmaterial und eine daraus hergestellte Komponente enthaltender Reifen
Composite caoutchouc/corde en polyester et pneu comportant des composés de celui-ci

(30) Priority: 09.03.1994 US 208255
(43) Date of publication of application: 18.10.1995
(73) Proprietor: THE GOODYEAR TIRE & RUBBER COMPANY, Akron, Ohio 44316-0001 (US)
(72) Inventor: Segatta, Thomas Joseph, Lawton, OK 73505 (US); Schwarze, H. John, Uniontown, OH 44685 (US)
(74) Representative: Leitz, Paul

(56) References cited:
- EP-A- 0 261 440
- US-A- 3 410 818
- US-A- 4 075 159

## Description

### Field

This invention relates to the adherence of polyester filaments, or cord of multiple filaments thereof, to rubber. The invention further relates to a composite composed of both a rubber which contains, as curatives, sulfur and sulfenamide and/or benzothiazyl disulfide vulcanization accelerator(s) therefor and an RFL coated polyester filament or cord thereof, particularly where such filament, or cord thereof, is embedded in the rubber as reinforcement therefor. The invention additionally relates to a tire having at least one component as such composite.

### Background

Composites of fiber-reinforced rubber are useful for many purposes including pneumatic tires and industrial products such as belts.

Typically, such reinforcing fibers are in the form of a cord composed of cabled, or twisted, filaments. The filaments might also be sometimes referred to as yarns. Such fibers can be of various materials including, for example, nylon, polyester, wire, rayon, cotton and glass fibers. This invention is concerned with polyester filaments and/or cord thereof.

It should be pointed out that cords for rubber reinforcement purposes are normally composed of filaments, which might sometimes be referred to as yarns, which are twisted together. Such twisted filaments or yarns are referred to as cables and, thus, a cord might sometimes be referred to, for example, as cabled yarns. Such twisting of filaments to form a cord thereof for rubber reinforcement purposes is well known to those having skill in such art.

An important requirement of a polyester fiber reinforced rubber composite is the adhesion of the reinforcing polyester fiber, or cord thereof, to the rubber itself, or vice versa. Such adhesion is of particular importance where the resulting composite is subjected to considerable flexing and distortion, such as contortions encountered in the typical operation and use of pneumatic tires and industrial belts.

While various methods have been proposed and have been used to obtain adequate adhesion of polyester fiber, or cord, to rubber, an RFL dip pre-treatment of the cord and/or its filaments has been widely accepted.

For example, the polyester fiber or cord is conventionally pre-treated prior to adhering to rubber by dipping, followed by drying, in an aqueous emulsion comprised of a resorcinol/formaldehyde/terpolymer rubber latex (RFL), a latex treatment well-known to those having skill in such art, in which the resorcinol/formaldehyde resin is contained in an aqueous rubber latex, usually, for example, a butadiene/styrene/vinylpyridine terpolymer latex. The resorcinol/formaldehyde resin is understood to be a primary element, or contributor, of the adhesion between the cord and the rubber for the composite and the rubber of the latex, in one aspect, is considered to be an important factor in somewhat reducing the modulus of the resin. This and other elements relating to the features of the RFL for adhering polyester cord to rubber are generally well known to those having skill in such art.

For further reference to such art, in general, see DE-A-1 920 917.

Rubber compositions for the polyester fiber or cord reinforced composites are usually sulfur curable rubber compositions, such as diene-based elastomers and, thus, contain sulfur. In many of such sulfur curable rubber compositions, sulfenamides and/or benzothiazyl disulfide are used as cure accelerators, together with the sulfur curative.

EP-A- 261 440 discloses an adhesive composition comprising a butadiene-styrene-vinylpyridine copolymer latex, a carboxylated butadiene-styrene base copolymer latex and a resorcin-formalin resin.

In one aspect, the composite of this invention is composed of a relatively thin layer of rubber composition which encompasses an RFL coated polyester tire cord reinforcement for a tire. Such a rubber layer is sometimes referred to as a rubber skim stock.

The term "phr" if used herein, and according to conventional practice, refers to "parts of a respective material per 100 parts by weight of rubber, or elastomer".

In the description of this invention, the terms "rubber" and "elastomer", if used, can be used interchangeably, unless otherwise distinguished. The terms "rubber composition", "compounded rubber" and "rubber compound", if used, can be used interchangeably to refer to rubber which has been blended or mixed with various ingredients and materials and such terms are well known to those having skill in the rubber mixing or rubber compounding art.

### Disclosure And Practice Of The Invention

According to the invention, a composite comprised of a reinforcing element comprised of a filament, and/or cord thereof, of RFL coated polyester and rubber bonded to said element and a tire having as a component thereof such composite are provided, as recited in the claims.

The polyester textile fiber and/or cord thereof has been coated by dipping in an aqueous latex and drying prior to application of the rubber composition which contains the sulfur, accelerator(s) and salicylic acid. The latex is comprised of an RFL adhesive in which the "L" represents a latex of a terpolymer of styrene, butadiene and vinyl pyridine and the "RF" represents the resorcinol/formaldehyde resin. Such RFL latices, adhesives and applications to polyester fibers and cords are well known to those having skill in such art.

In further accordance with this invention, a pneumatic tire, particularly a rubber tire, is provided having, as at least one component thereof, the composite of this invention.

Typically such composite is used as a component in a tire as a polyester cord reinforced belt, or polyester cord ply and, thus, is important to contribute to the tire's load bearing capability, handling, and load bearing durability and retreadability. The use of composites of RFL coated polyester cords, including a textile fabric thereof, for reinforcement in pneumatic tires is well known to those having skill in the tire reinforcement art.

Such tire component, then, for example, can be a composite of the rubber and RFL coated polyester cord in the form of a belt positioned circumferentially around the tire in the crown portion thereof between the tire tread and the tire carcass plies. The composite can also be in the form of a radial or bias carcass ply in the tire. The aforesaid belt, and carcass plies are well known pneumatic rubber tire components.

In one aspect, such a tire is provided with the rubber component being sulfur cured. The sulfur curing is accomplished in a conventional manner, namely, by curing under conditions of elevated temperature and pressure for a suitable period of time. Representative curing, or vulcanization, temperatures are, for example, in a range of 135 to 185°C.

It is considered herein that the utilization of salicylic acid within the practice of this invention is a departure from past practice, particularly for use as a skim stock for cord reinforcement. Indeed, it is considered that the salicylic acid in this invention is not being used as an effective vulcanization retarder because observed rheometer data indicates no retarding action whatsoever with sulfenamide accelerators, yet an improved adhesion to the coated polyester cord has been observed.

In the practice of this invention, the composite of this invention can be prepared by conventional means, for example, by coating, such as by calendering, the reinforcing RFL coated polyester filament or cord with rubber which contains the sulfur, sulfenamide and/or benzothiazyl disulfide vulcanization accelerator(s) and salicylic acid, as well as particulate reinforcements such as carbon black, optionally silica if used, and other compounding ingredients as described herein.

The polyester filament itself may be of a composition, for example, described as standard modulus, or high modulus, polyester (tire cord grade). The polyester may conveniently be prepared, for example, by reacting ethylene glycol and dimethylphthalate and the filaments may be produced by drawing and spinning drawing. Such polyester compositions and methods of preparation, including fiber preparation are illustrated as representative examples only and, as such, are considered herein to be well known to those having skill in such art.

In the practice of this invention, as hereinbefore pointed out, the rubber composition is comprised of at least one diene-based elastomer, or rubber. Thus, it is considered that the elastomer is a sulfur curable elastomer. Such elastomer, or rubber, may be selected, for example, from at least one of cis 1,4-polyisoprene rubber (natural and/or synthetic, and preferably natural rubber), styrene/butadiene copolymer rubbers whether prepared by organic solution or emulsion polymerization, cis 1,4-polybutadiene rubber, 3,4-polyisoprene rubber, butadiene/acrylonitrile copolymer rubbers, styrene/isoprene/butadiene terpolymer rubbers, and isoprene/butadiene copolymer rubber. In one aspect the rubber is preferably of at least two diene based rubbers. For example, a combination of two or more rubbers may be preferred such as cis 1,4-polyisoprene rubber (at least 50 phr of the rubber) (natural or synthetic, although natural is preferred), solution or emulsion polymerization derived styrene/butadiene rubbers, and cis 1,4-polybutadiene rubber.

The solution (S-SBR) or emulsion (E-SBR) polymerization prepared SBR typically has a bound styrene content in a range of 5 to 50, preferably 9 to 36, percent. The S-SBR can be conveniently prepared, for example, by organo lithium catalyzation in the presence of an organic hydrocarbon solvent. The E-SBR can be prepared by emulsifying styrene and butadiene and polymerizing in the presence of a peroxide catalyst.

The polybutadiene rubber may be conveniently typified, for example, by having at least a 90% cis 1,4-content.

The cis 1,4-polyisoprene and cis 1,4-polyisoprene natural rubber are well known to those having skill in the rubber art.

The vulcanized rubber composition should contain a sufficient amount of carbon black, and silica if used, as reinforcing filler(s) to contribute a reasonably high modulus and high resistance to tear as well as good cut growth properties and low hysteresis. The combined weight of the carbon black, and optional silica, as particulate rubber reinforcement as hereinbefore referenced, may be as low as about 35 parts per 100 parts rubber, but is preferably from 40 to 95 parts by weight.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black and reactive resins. As known to those skilled in the art, depending on the intended use of the sulfur vulcanizable and sulfur vulcanized material (rubbers), the additives mentioned above are selected and commonly used in conventional amounts.

Typical amounts of reinforcing type carbon blacks(s), for this invention are hereinbefore set forth. Typical amounts of tackifier resins, if used, comprise 0.5 to 10 phr, usually 1 to 5 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the **VANDERBILT**, *Rubber Handbook,* 1978, p344-346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to 8 phr, with a range of from 1.5 to 2.5, sometimes from 2 to 2.5, being preferred.

Accelerators are used to control the time and/or temperature required for vulcanization and to improve the properties of the vulcanizate. Sulfenamide accelerator(s) is/are required to be present. Indeed, in one embodiment, a single accelerator system may be used, i.e., primary accelerator, namely the sulfenamide. Conventionally and preferably, the primary accelerator(s) is/are used in total amounts ranging from 0.5 to 4, preferably 0.8 to 1.5, phr. In another embodiment, combinations of a primary and a secondary accelerator might be used with the secondary accelerator being used in smaller amounts (of 0.05 to 3 phr) in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention, in addition to the sulfenamide primary accelerator are amines, disulfides, guanidines, thioureas, thiazoles, thiazolines, thiurams, dithiocarbamates and xanthates. If a secondary accelerator is used, the secondary accelerator is, for example, preferably a guanidine, dithiocarbamate or thiuram compound.

The mixing of the rubber composition can be accomplished by methods known to those having skill in the rubber mixing art. For example, the ingredients are typically mixed in at least two stages, namely at least one non-productive stage followed by a productive, or final, mix stage. The final curatives are typically mixed in the final stage which is conventionally called the "productive" mix stage in which the mixing typically occurs at a temperature, or ultimate temperature, lower than the mix temperature(s) in the preceding non-productive mix stage(s). The rubber, oil, carbon black, and silica if used, may be mixed in one or more non-productive mix stages. The terms "non-productive" and "productive" mix stages are well known to those having skill in the rubber mixing art.

The tire can be built, shaped, molded and cured by various methods which are known and will be readily apparent to those having skill in such art.

The invention may be better understood by reference to the following examples in which the parts and percentages are by weight unless otherwise indicated.

### Example I

Rubber compositions comprised of the materials identified in Table I were mixed in a conventional rubber mixer using two separate stages of addition, namely, one non-productive mix stage followed by one productive mix stage. The sequential steps of mixing rubber in non-productive and productive stages are well known to those skilled in such art. In the non-productive mix stages the rubber and ingredients are mixed together except for the sulfur and vulcanization accelerator(s), namely the sulfenamide, or benzothiazyl disulfide, which are mixed in the productive stage. The salicylic acid is mixed in the productive stage. To demonstrate the uniqueness of salicylic acid, other acidic retarders are shown.

Table II shows the cure behavior and cured properties for a control without using the salicylic acid (Sample A) and the experimental compounds which contained the salicylic acid (Sample B).

A composite of the rubber composition and polyester cord is prepared by coating the rubber composition of Table I onto a textile fabric of polyester cord by layering calendered rubber sheets on both sides of the cords. The sheet of the rubber is about 0.06 inches (0.15 cm) thick and polyester cords in the resulting composite are spaced about one inch (2.5 cm) apart and positioned about 3/4 inch (1.9 cm) into the rubber. The rubber composition, thus, encompassed the polyester cord, although the ends of the cord were exposed so that the cord might be clamped by the jaws of a test apparatus.

The composite is then submitted to vulcanization conditions at a temperature of about 150°C for about 36 minutes to vulcanize, or cure, the rubber composition with the polyester cord embedded within.

The polyester cord was in a form of cord on a spool and had the reported dimensions of 0.022 inches (0.06 cm) diameter, properties as standard modulus which was about 30 pounds breaking strength and is a copolymer of PET, namely polyethylene-terethalate. It was obtained as standard modulus yarn from the Akzo company.

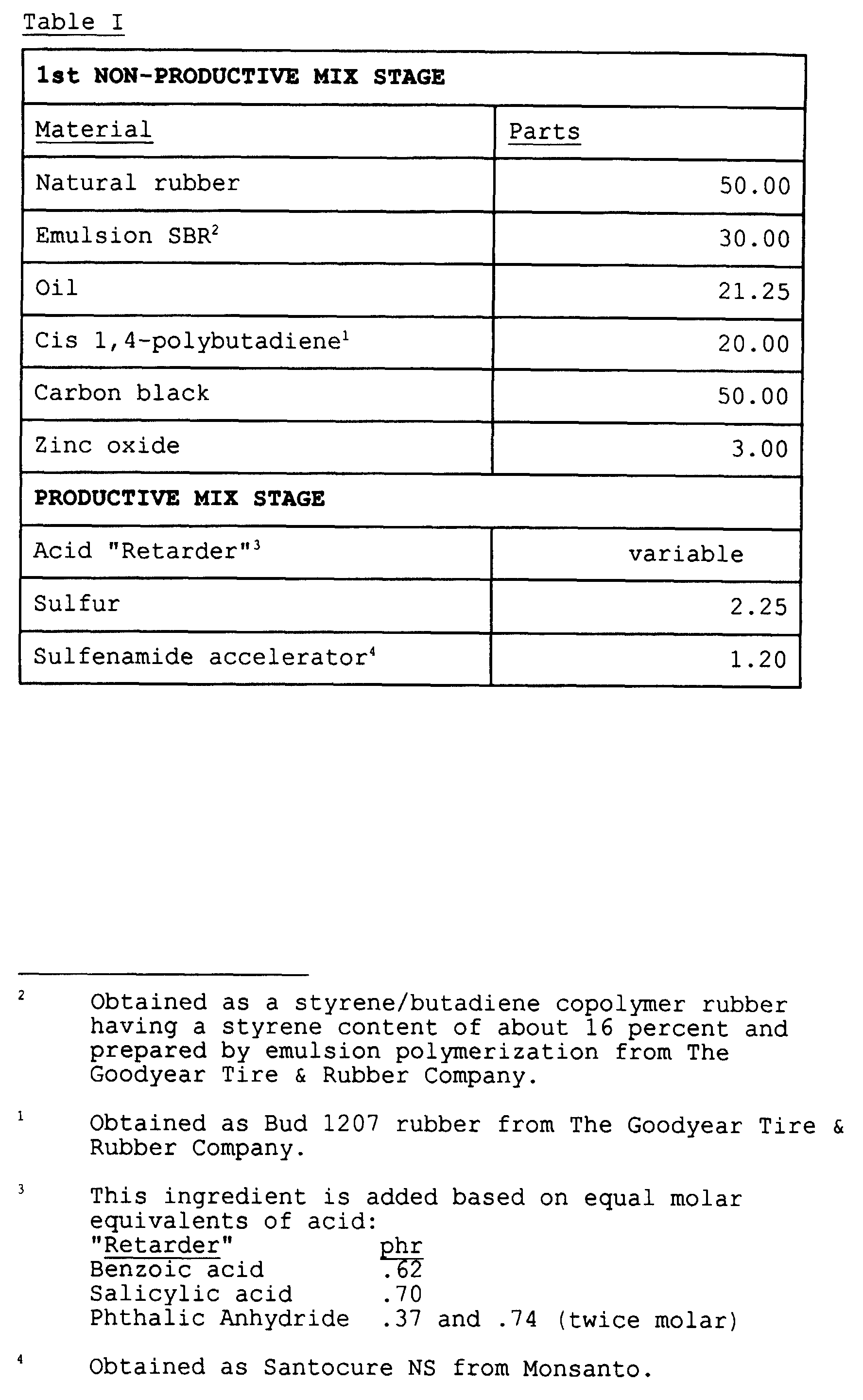

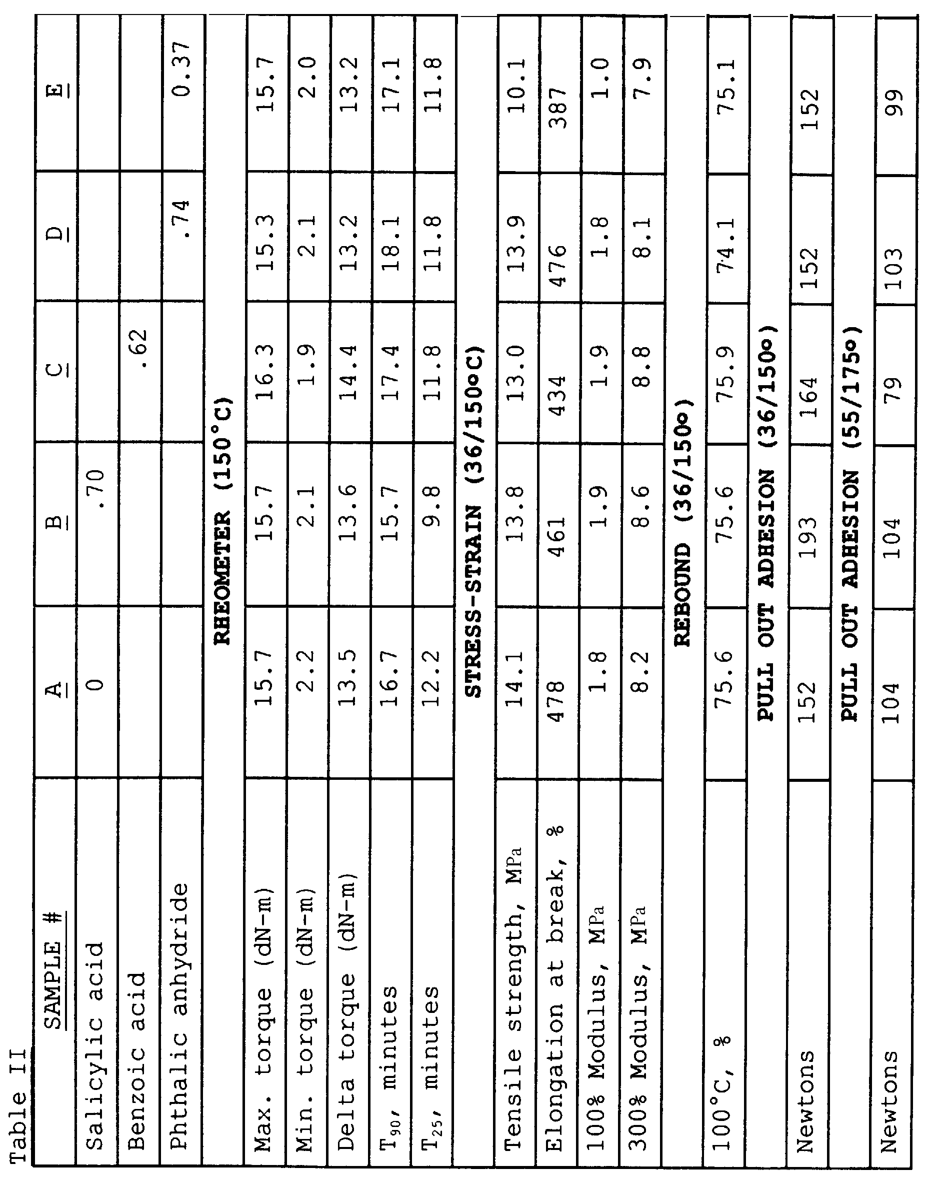

Comparing Compound A (control) and Compound B (salicylic acid) shows that the two compounds have very similar stress - strain and hysteresis characteristics, but salicylic acid provided much higher polyester cord pull out at 36/150°C cure (an increase of over 25%). In addition, although salicylic acid is known as a cure retarder in some elastomer/curative systems, it does not show retarding effects here. In fact it sped up the cure as measured by T₂₅ and T₉₀. Thus, salicylic acid was not observed to be a retarder in these sulfenamide accelerated compounds.

Compounds B, C and D give information on other acidic materials classified as retarders. Like the salicylic acid, they give similar stress-strain and hysteresis properties compared to the control, but they do not give significant adhesion increases. In addition, these materials do show some retarding effect by slowing T₉₀. This again indicates that salicylic acid is not a retarder like any other in this system; it is indeed unique.

### Example II

A rubber composition was prepared in the manner of Example I but with higher levels (larger amounts) of salicylic acid as shown in the accompanying Table III.

**Table III**

| **1st NON-PRODUCTIVE MIX STAGE** | |
|---|---|
| NR | 52.5 |
| E-SBR | 30.00 |
| Cis 1,4-polybutadiene | 17.50 |
| Carbon black | 50.00 |
| Oil & Extenders | 31.25 |
| Resorcinol | 1.00 |

| **PRODUCTIVE MIX STAGE** | |
|---|---|
| TBBS¹ | 1.20 |
| Salicylic acid | variable |
| Hexamethoxymethyl melamine | 1.00 |
| Zinc Oxide | 3.00 |
| Sulfur | 2.25 |
| DPG² | .30 |

| | |
|---|---|
| ¹ Tetrabutylbenzothiazol sulfenamide. | |
| ² Diphenylguanidine. | |

**Table IV**

| INGREDIENTS | A (CONTROL) | B |
|---|---|---|
| Salicylic acid | | 1.40 |

| **STRESS STRAIN 36/150°C** | | |
|---|---|---|
| 300% modulus (MPa) | 7.9 | 8.1 |

| **PULL OUT FORCE 36/150°C** | | |
|---|---|---|
| Newtons | 145 | 160 |

| **PULL OUT FORCE 55/175°C** | | |
|---|---|---|
| Newtons | 90 | 120 |

This Example illustrates that higher levels of salicylic acid (greater than 0.7 phr) was observed to produce higher pull out force at long, hot cures, e.g. 55 minutes at 175°.

This is important for thick tires such as off-the-road tires since such tires require long cure times.

### Example III

Rubber compositions were prepared as in Example I as illustrated in the following Table V.

**Table V**

| **1st NON-PRODUCTIVE MIX STAGE** | |
|---|---|
| Natural rubber | 70 |
| Cis 1,4-polybutadiene rubber | 30 |
| Oil & extender | 20 |
| Phenoxy acetic acid | .75 |
| Carbon black | Variable (52.50 to 60.0) |
| Silica | Variable |

| **PRODUCTIVE MIX STAGE** | |
|---|---|
| Benzothiazyl disulfide | Variable (.70 to 1.3) |
| Salicylic acid | Variable (.50 to 2.5) |
| HEMA¹ | 1.00 |
| Zinc Oxide | 3.00 |
| Sulfur | Variable (2.0 to 2.4) |

| | |
|---|---|
| ¹ Hexamethoxy methylmelamine | |

The following Table VI illustrates the physical properties obtained.

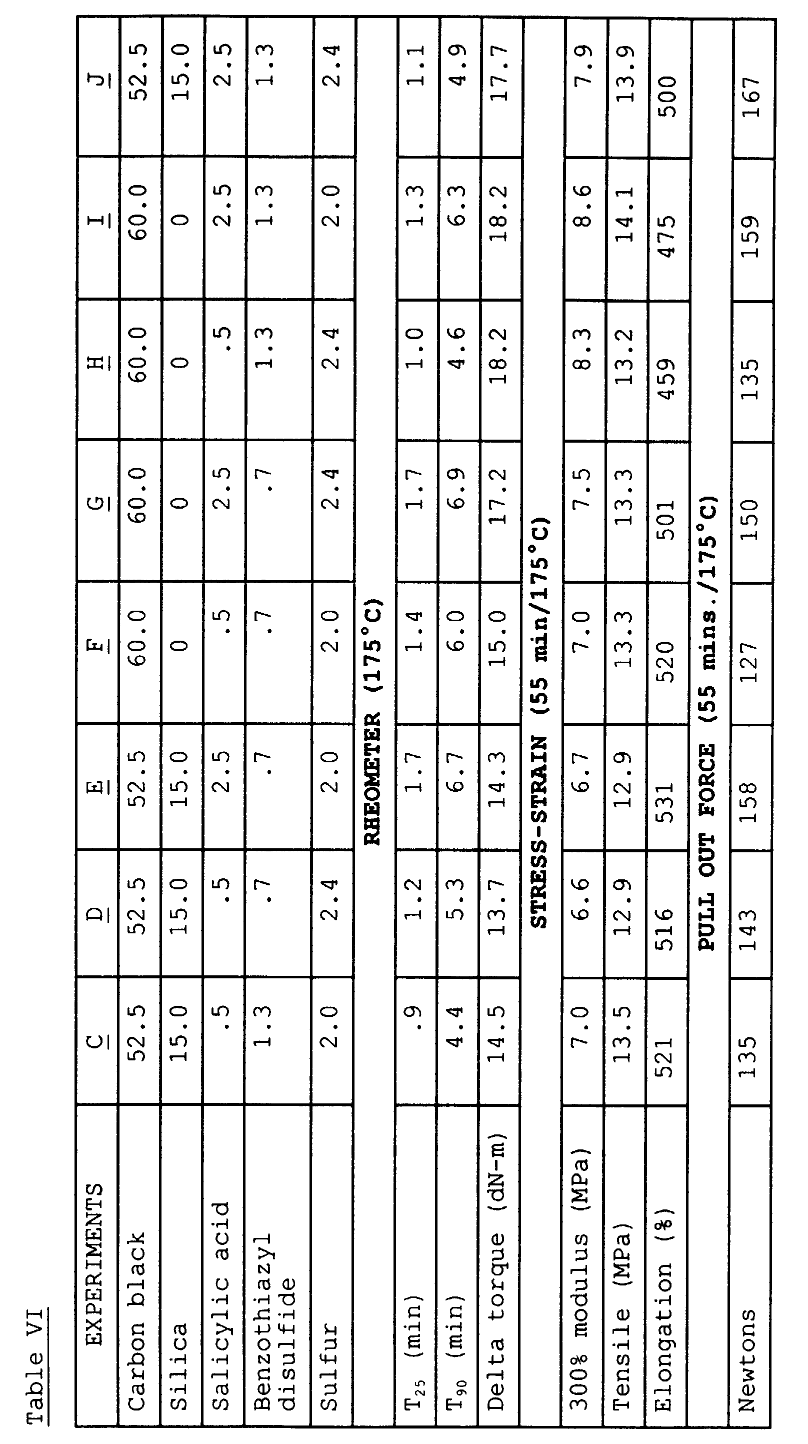

Conclusions from this designed experiment are difficult to draw without statistical analysis. Only the conclusions related to the salicylic acid we discussed below.

By averaging the results obtained from the low level of 0.5 phr of salicylic acid and comparing it to the average of results obtained from high level of 2.5 phr of salicylic acid, the following conclusions can be drawn:
Increasing salicylic acid (1) increased the 300% modulus property an average of 0.5 MPa, (2) increased the delta torque property an average of 1.5 dN-m, (3) increased the T₂₅ time property an average of 0.32 minutes and (4) increased the pull out force test an average of 24 Newtons.

This confirms the observation of improving adhesion to coated polyester cord and demonstrates the benefits of high levels (2.5 phr) of salicylic acid in the rubber composition. In the cure systems using only benzothiazyl disulfide accelerator, a slower cure time does result from the salicylic acid, showing the retarding effect of the salicylic acid.

The polyester adhesion benefit is, however, observed to be independent of the retardation effect, if any, of the salicylic acid since retardation was observed only with dithiazyl disulfide, but increased adhesion is seen with both dithiazyl disulfide and TBBS (tetrabutyl benzothiazyl disulfide).

### Example IV

A pneumatic rubber farm tire was prepared with carcass plies of a composite of rubber, which contains sulfur and sulfenamide vulcanization accelerator, and RFL treated polyester cord of this invention, where said ply is positioned at a bias angle around the tire in the crown of the tire between the tire tread and innerliner.

The tire is mounted on a rim, inflated and tested by running it against a rotating wheel at 140% of the tire's rated load, at the tire's inflation with the following results: both tires containing the new ply coat ran 300 hours from start to finish while only one tire of the control ran 300 hours. Sections removed from the tires showed adhesion improvements averaging 20% as compared to the central tire without the salicylic acid/dithiazyl disulfide cure system.

As a result, it is considered that the tire demonstrated improved durability that should result in a more rugged tire and reduced ply separations in service.

It is considered herein that the utilization of the composite of this invention as a carcass ply and/or belt component(s) of a pneumatic rubber tire is important and significant because it should last longer and tolerate more hostile service conditions.

## Claims

1. A composite comprised of a reinforcing element comprised of a filament, and/or cord thereof, of resorcinol/formaldehyde resin contained in an aqueous terpolymer elastomer latex (RFL) coated polyester and rubber bonded to said element, characterized in that the rubber is comprised of, prior to vulcanization and based on 100 parts by weight rubber (phr), (A) 100 phr of at least one diene-based elastomer, composed of at least 50 phr of cis 1,4-polyisoprene natural rubber, (B) 0.4 to 3 phr of at least one vulcanization accelerator selected from sulfenamide and benzothiazyl disulfide, (C) 0.5 to 3 phr of sulfur, and (D) 0.5 to 4 phr of salicylic acid; wherein RFL is the product of (i) 2 to 20 weight percent of a resin as a product of resorcinol and formaldehyde and (ii) 80 to 98 weight percent of a terpolymer elastomer as a product of styrene, 1,3-butadiene and vinyl pyridine.

2. The composite of claim 1 characterized in that said sulfenamide accelerator is selected from at least one of N-t-butyl-2-benzothiazyl sulfenamide, N-cyclohexyl-2-benzothiazyl sulfenamide, N,N-dicyclohexyl-2-benzothiazyl sulfenamide, N,N-diethyl-2-benzothiazyl sulfenamide and N,N-butyl-2-dibenzothiazyl sulfenamide.

3. The composite of claim 1 characterized in that one or more additional accelerators are also contained in the composite selected from at least one of thiazole, thiazoline, thiuram monosulfide, thiuram disulfide and diphenylguanidine provided, however, that said additional accelerators are present in an amount of less than 15 percent of said sulfenamide and benzothiazyl disulfide accelerator(s).

4. The composite of claim 1 characterized in that the RFL is the product of (i)2 to 20 weight percent of a resin as a product of resorcinol and formaldehyde and (ii) 90 to 95 weight percent of a terpolymer elastomer as a product of styrene, 1,3-butadiene and vinyl pyridine.

5. The composite of claim 1 characterized in that the rubber is comprised of, prior to vulcanization and based on 100 parts by weight rubber (phr), (A) 100 phr of at least one diene-based elastomer, composed of at least 50 phr of cis 1,4-polyisoprene natural rubber, (B) 0.5 to 2 phr of at least one vulcanization accelerator selected from sulfenamide and benzothiazyl disulfide, (C) 0.7 to 2.8 phr sulfur, and (D) 1 to 2.5 phr salicylic acid; wherein RFL is the product of (i) 5 to 10 weight percent of a resin comprised of 1.5 to 2.5 weight percent units derived from resorcinol and 0.75 to 1.25 weight percent units derived from formaldehyde and (ii) 90 to 95 weight percent of a terpolymer elastomer comprised of 15 to 40 weight percent units derived from styrene, 40 to 75 weight percent units derived from 1,3-butadiene and 10 to 20 weight percent units derived from vinyl pyridine.

6. The composite of claim 5 characterized in that the RFL is the product of (i) 5 to 10 weight percent of a resin comprised of 1.5 to 2.5 weight percent units derived from resorcinol and 0.75 to 1.25 weight percent units derived from formaldehyde and (ii) 90 to 95 weight percent of a terpolymer elastomer comprised of 15 to 40 weight percent units derived from styrene, 40 to 75 weight percent units derived from 1,3-butadiene and 15 to 20, weight percent units derived from vinyl pyridine.

7. A tire having, as a component thereof, the composite of claim 1 or 5.

8. The tire of claim 7 having an outer circumferential tread where said component is a circumferential belt positioned beneath the said tread.

9. The tire of claim 7 having an outer, circumferential tread and a supporting carcass therefor, wherein said component is said supporting carcass.

## Patentansprüche

1. Komposit, welches ein verstärkendes Element, umfassend einen Faden und/oder Kord daraus aus Polyester, der mit in einem wäßrigen Terpolymer-Elastomerlatex enthaltenem Resorcin/Formaldehyd-Harz (RFL) beschichtet ist, und an das Element gebundenen Kautschuk umfaßt, dadurch gekennzeichnet, daß der Kautschuk vor der Vulkanisation und bezogen auf 100 Gewichtsteile Kautschuk (ThK) umfaßt (A) 100 ThK mindestens eines Elastomers auf Dien-Basis, zusammengesetzt aus mindestens 50 ThK cis-1,4-Polyisopren-Naturkautschuk, (B) 0,4 bis 3 ThK mindestens eines aus Sulfenamid und Benzothiazyldisulfid ausgewählten Vulkanisationsbeschleunigers, (C) 0,5 bis 3 ThK Schwefel und (D) 0,5 bis 4 ThK Salicylsäure; worin RFL das Produkt von (i) 2 bis 20 Gew.-% eines Harzes als Produkt von Resorcin und Formaldehyd und (ii) 80 bis 98 Gew.-% eines Terpolymer-Elastomers als Produkt von Styrol, 1,3-Butadien und Vinylpyridin ist.

2. Komposit nach Anspruch 1, dadurch gekennzeichnet, daß der Sulfenamid-Beschleuniger ausgewählt ist aus mindestens einem von N-t-Butyl-2-benzothiazylsulfenamid, N-Cyclohexyl-2-benzothiazylsulfenamid, N,N-Dicyclohexyl-2-benzothiazylsulfenamid, N,N-Diethyl-2-benzothiazylsulfenamid und N,N-Butyl-2-dibenzothiazylsulfenamid.

3. Komposit nach Anspruch 1, dadurch gekennzeichnet, daß in dem Komposit auch ein oder mehrere zusätzliche Beschleuniger enthalten sind, die aus mindestens einem von Thiazol, Thiazolin, Thiurammonosulfid, Thiuramdisulfid und Diphenylguanidin ausgewählt sind, jedoch mit der Maßgabe, daß die zusätzlichen Beschleuniger in einer Menge von weniger als 15% des bzw. der Sulfenamid- und Benzothiazyldisulfid-Beschleuniger(s) vorhanden sind.

4. Komposit nach Anspruch 1, dadurch gekennzeichnet, daß der RFL das Produkt von (i) 2 bis 20 Gew.-% eines Harzes als Produkt von Resorcin und Formaldehyd und (ii) 90 bis 95 Gew.-% eines Terpolymer-Elastomers als Produkt von Styrol, 1,3-Butadien und Vinylpyridin ist.

5. Komposit nach Anspruch 1, dadurch gekennzeichnet, daß der Kautschuk vor der Vulkanisation und bezogen auf 100 Gewichtsteile Kautschuk (ThK) umfaßt (A) 100 ThK mindestens eines Elastomers auf Dien-Basis, zusammengesetzt aus mindestens 50 ThK cis-1,4-Polyisopren-Naturkautschuk, (B) 0,5 bis 2 ThK mindestens eines aus Sulfenamid und Benzothiazyldisulfid ausgewählten Vulkanisationsbeschleunigers, (C) 0,7 bis 2,8 ThK Schwefel und (D) 1 bis 2,5 ThK Salicylsäure; worin RFL das Produkt von (i) 5 bis 10 Gew.-% eines Harzes, umfassend 1,5 bis 2,5 Gew.-% von Resorcin abgeleitete Einheiten und 0,75 bis 1,25 Gew.-% von Formaldehyd abgeleitete Einheiten, und (ii) 90 bis 95 Gew.-% eines Terpolymer-Elastomers, umfassend 15 bis 40 Gew.-% von Styrol abgeleitete Einheiten, 40 bis 75 Gew.-% von 1,3-Butadien abgeleitete Einheiten und 10 bis 20 Gew.-% von Vinylpyridin abgeleitete Einheiten, ist.

6. Komposit nach Anspruch 5, dadurch gekennzeichnet, daß der RFL das Produkt von (i) 5 bis 10 Gew.-% eines Harzes, umfassend 1,5 bis 2,5 Gew.-% von Resorcin abgeleitete Einheiten und 0,75 bis 1,25 Gew.-% von Formaldehyd abgeleitete Einheiten, und (ii) 90 bis 95 Gew.-% eines Terpolymer-Elastomers, umfassend 15 bis 40 Gew.-% von Styrol abgeleitete Einheiten, 40 bis 75 Gew.-% von 1,3-Butadien abgeleitete Einheiten und 15 bis 20 Gew.-% von Vinylpyridin abgeleitete Einheiten, ist.

7. Reifen, welcher das Komposit nach Anspruch 1 oder 5 als Komponente desselben aufweist.

8. Reifen nach Anspruch 7, welcher eine äußere Umfangslauffläche aufweist, wobei es sich bei der Komponente um einen unterhalb der Lauffläche angeordneten, entlang des Umfangs verlaufenden Gürtel handelt.

9. Reifen nach Anspruch 7, welcher eine äußere Umfangslauffläche und eine stützende Karkasse dafür aufweist, wobei es sich bei der Komponente um die stützende Karkasse handelt.

## Revendications

1. Composite comprenant un élément de renforcement qui comprend un filament et/ou un câblé constitué de ce dernier, d'une résine de résorcinol/formaldéhyde contenue dans un polyester enduit d'un latex élastomère de terpolymère aqueux (RFL), et un caoutchouc collé audit élément, caractérisé en ce que le caoutchouc comprend, avant la vulcanisation, et basées sur 100 parties en poids de caoutchouc (phr), (A) à concurrence de 100 phr, au moins un élastomère à base diénique composé, à concurrence d'au moins 50 phr, de caoutchouc naturel de cis-1,4-polyisoprène, (B) à concurrence de 0,4 à 3 phr, au moins un accélérateur de la vulcanisation choisi parmi le sulfénamide et le disulfure de benzothiazyle, (C) à concurrence de 0,5 à 3 phr, du soufre et (D) à concurrence de 0,5 à 4 phr, de l'acide salicylique; dans lequel le RFL représente le produit de (i) à concurrence de 2 à 20 pour cent en poids, une résine sous forme d'un produit de résorcinol et de formaldéhyde, et de (ii) à concurrence de 80 à 98 pour cent en poids, un élastomère terpolymère sous forme d'un produit de styrène, du 1,3-butadiène et de vinylpyridine.

2. Composite selon la revendication 1, caractérisé en ce que ledit sulfénamide, à titre d'accélérateur, représente au moins un accélérateur choisi parmi le groupe comprenant le sulfénamide de N-t-butyl-2-benzothiazyle, le sulfénamide de N-cyclohexyl-2-benzothiazyle, le sulfénamide de N,N-dicyclohexyl-2-benzothiazyle, le sulfénamide de N,N-diéthyl-2-benzothiazyle et le sulfénamide de N,N-butyl-2-dibenzothiazyle.

3. Composite selon la revendication 1, caractérisé en ce qu'un ou plusieurs accélérateurs supplémentaires sont également contenus dans le composite, qui représentent au moins un accélérateur choisi parmi le groupe comprenant le thiazole, la thiazoline, le monosulfure de thiurame, le disulfure de thiurame et la diphénylguanidine, à condition toutefois que lesdits accélérateurs supplémentaires soient présents en une quantité représentant moins de 15 pour cent du ou desdits accélérateurs du type du sulfénamide et du type du disulfure de benzothiazyle.

4. Composite selon la revendication 1, caractérisé en ce que le RFL représente le produit de (i) à concurrence de 2 à 20 pour cent en poids, une résine sous forme d'un produit de résorcinol et de formaldéhyde, et de (ii) à concurrence de 90 à 95 pour cent en poids, un élastomère terpolymère sous forme d'un produit de styrène, du 1,3-butadiène et de vinylpyridine.

5. Composite selon la revendication 1, caractérisé en ce que le caoutchouc comprend, avant la vulcanisation et basées sur 100 parties en poids de caoutchouc (phr), (A) à concurrence de 100 phr, au moins un élastomère à base diénique composé, à concurrence d'au moins 50 phr, de caoutchouc naturel de cis-1,4-polyisoprène, (B) à concurrence de 0,5 à 2 phr, au moins un accélérateur de la vulcanisation choisi parmi le sulfénamide et le disulfure de benzothiazyle, (C) à concurrence de 0,7 à 2,8 phr, du soufre et (D) à concurrence de 1 à 2,5 phr, de l'acide salicylique; dans lequel le RFL représente le produit de (i) à concurrence de 5 à 10 pour cent en poids, une résine comprenant, à concurrence de 5 à 2,5 pour cent en poids, des unités dérivées du résorcinol et, à concurrence de 0,75 à 1,25 pour cent en poids, des unités dérivées du formaldéhyde, et de (ii) à concurrence de 90 à 95 pour cent en poids, un élastomère terpolymère comprenant, à concurrence de 15 à 40 pour cent en poids, des unités dérivées du styrène, à concurrence de 40 à 75 pour cent en poids, des unités dérivées du 1,3-butadiène et, à concurrence de 10 à 20 pour cent en poids, des unités dérivées de la vinylpyridine.

6. Composite selon la revendication 5, caractérisé en ce que le RFL représente le produit de (i) à concurrence de 5 à 10 pour cent en poids, une résine comprenant, à concurrence de 1,5 à 2,5 pour cent en poids, des unités dérivées du résorcinol, et à concurrence de 0,75 à 1,25 pour cent en poids, des unités dérivées du formaldéhyde, et de (ii) à concurrence de 90 à 95 pour cent en poids, un élastomère terpolymère comprenant, à concurrence de 15 à 40 pour cent en poids, des unités dérivées du styrène, à concurrence de 40 à 75 pour cent en poids, des unités dérivées du 1,3-butadiène et, à concurrence de 15 à 20 pour cent en poids, des unités dérivées de la vinylpyridine.

7. Pneumatique comportant, à titre d'un de ses composants, le composite selon la revendication 1 ou 5.

8. Pneumatique selon la revendication 7, possédant une bande de roulement circonférentielle externe, dans lequel ledit composant est une ceinture circonférentielle positionnée en dessous de ladite bande de roulement.

9. Pneumatique selon la revendication 7, possédant une bande de roulement circonférentielle externe et une carcasse de support qui lui est destinée, dans lequel ledit composant est ladite carcasse de support.
